# EUROPEAN PATENT SPECIFICATION

(11) **EP 4 604 640 B1**
(45) Date of publication and mention of the grant of the patent: **04.11.2026**
(21) Application number: 25187158.8
(22) Date of filing: 12.08.2020
(51) Int. Cl.: H04L 5/00, H04W 72/04

(54) **QUASI CO-LOCATION HYPOTHESIS DETERMINATION METHOD AND APPARATUS, STORAGE MEDIUM AND ELECTRONIC APPARATUS**
VERFAHREN UND VORRICHTUNG ZUR BESTIMMUNG DER HYPOTHESEN VON QUASI-KOLLOKATION, SPEICHERMEDIUM UND ELEKTRONISCHE VORRICHTUNG
PROCÉDÉ ET APPAREIL DE DÉTERMINATION D'HYPOTHÈSE DE QUASI-COLOCALISATION, SUPPORT DE STOCKAGE ET APPAREIL ÉLECTRONIQUE

(30) Priority: 15.08.2019 CN 201910755329
(43) Date of publication of application: 20.08.2025
(62) Document number(s) of the earlier application(s) in accordance with Art. 76 EPC: 20852538.6 / 4 017 172
(73) Proprietor: ZTE CORPORATION, Shenzhen, Guangdong 518057 (CN)
(72) Inventor: HE, Zhen, SHENZHEN, 518057 (CN); ZHANG, Shujuan, SHENZHEN, 518057 (CN); JIANG, Chuangxin, SHENZHEN, 518057 (CN); GAO, Bo, SHENZHEN, 518057 (CN); LI, YU Ngok, SHENZHEN, 518057 (CN); LU, Zhaohua, SHENZHEN, 518057 (CN)
(74) Representative: Deambrogi, Edgardo

(56) References cited:
- WO-A1-2019/099659
- US-A1- 2019 141 693

## Description

### Technical Field

The present disclosure relates to the field of communications, and more particularly to a Quasi-Colocation (QCL) hypothesis determination method and apparatus, a storage medium and an electronic apparatus.

### Background

A beam indication method, in particular, receiving beam indication of a physical downlink reference signal or channel, such as a Physical Downlink Control Channel (PDCCH), a Physical Downlink Shared Channel (PDSCH) and Channel State Information Reference Signals (CSI-RS) specifically includes the following operations. Firstly, a Transmission Configuration Indication (TCI) state is activated or a TCI state set is selected via a Medium Access Control (MAC)-Control Element (CE) signaling. Then, a QCL hypothesis of a target downlink reference signal or channel is determined according to the TCI state. As an exemplary implementation, a receiving beam of the target downlink reference signal or channel is determined according to a source reference signal configured in QCL-Type D associated with the TCI state. The whole procedure is restricted to a single serving cell or a Component Carrier (CC) or a Bandwidth Part (BWP).

However, in a Carrier Aggregation (CA) scenario, User Equipment (UE) may support a maximum of 16 CCs or BWPs in a downlink connection. In such a case, it is required to activate a TCI state (or select a TCI state set) via a MAC-CE signaling on each CC or BWP to complete beam indications of PDCCHs, PDSCHs and CSI-RSs on all the CCs or BWPs, and thus a maximum of 16 MAC-CE signaling would be required. For example, the same beam is indicated for PDCCHs on 16 CCs or BWPs by 16 TCI states activated by 16 MAC-CE signalings, resulting in a large signaling overhead. Aiming at the above problems in the related art, no effective solution has been proposed yet.

The related document (WO 2019099659 A1) discloses beam management in a wireless network cross reference to related applications. The related document (US 2019141693 A1) discloses method and apparatus for beam management in the unlicensed spectrum.

### Summary

Embodiments of the present disclosure provide a QCL hypothesis determination method and apparatus, a storage medium and an electronic apparatus, which may solve at least the problem of a large signaling overhead caused by activation of a TCI state or a TCI state subset on each CC respectively via a MAC-CE signaling for achieving a beam indication of a PDCCH, a PDSCH or a CSI-RS in the related art.

The object of the invention is achieved by the subject-matter of the independent claims. The dependent claims describe advantageous embodiments. The scope of protection of the invention is limited by the appended claims.

Through the embodiments of the present disclosure, a second communication node determines, according to a TCI state indicated by a first communication node for receiving a target downlink reference signal or channel of a second-type CC or BWP, a QCL hypothesis of the target downlink reference signal or channel of the second-type CC or BWP. The indicated TCI state is associated with at least one of following pieces of configuration information: a first source reference signal, a second source reference signal, a set of offsets of a first source reference signal, and a set of CC or BWP indexes corresponding to offsets of a first source reference signal. The first source reference signal refers to a source reference signal that is transmitted on a first-type CC or BWP and provides a first QCL type. The second source reference signal refers to a source reference signal that is transmitted on the first-type CC or BWP and provides a second QCL type. The first-type CC or BWP and the second-type CC or BWP are configured in a same CC group or BWP group. The problem of a large signaling overhead caused by activation of a TCI state or a TCI state subset on each CC respectively via a MAC-CE signaling for achieving a beam indication of a PDCCH, a PDSCH or a CSI-RS in the related art is solved.

### Brief Description of the Drawings

Fig. 1 is a block diagram of a hardware structure of a mobile terminal for implementing a QCL hypothesis determination method according to an embodiment of the present disclosure;
Fig. 2 is a flowchart of a QCL hypothesis determination method according to an embodiment of the present disclosure;
Fig. 3 is a structural schematic diagram of a QCL hypothesis determination apparatus according to an embodiment of the present disclosure;
Fig. 4 is a schematic diagram of a mapping relationship between Synchronization Signal Block (SSB)1 and CSI-RS2 according to an embodiment of the present disclosure;
Fig. 5 is a schematic diagram 1 of SSB1 being configured in QCL-Type D of a TCI state applied to CSI-RS2 according to an embodiment of the present disclosure;
Fig. 6 is a schematic diagram of SB 1 being configured in QCL-Type C and QCL-Type D of a TCI state applied to CSI-RS2 according to an embodiment of the present disclosure;
Fig. 7 is a schematic diagram 2 of SSB1 being configured in QCL-Type D of a TCI state applied to CSI-RS2 according to an embodiment of the present disclosure;
Fig. 8 is a schematic diagram of CSI-RS6 associated with CSI-RS5 being configured in QCL-Type C applied to CSI-RS2 according to an embodiment of the present disclosure;
Fig. 9 is a schematic diagram of CSI-RS1 being configured in QCL-Type D of a TCI state applied to CSI-RS2 according to an embodiment of the present disclosure;
Fig. 10 is a schematic diagram of SSB1 or SSB1 being configured in QCL-Type C and QCL-Type D of CSI-RS1 according to an embodiment of the present disclosure;
Fig. 11 is a schematic diagram 1 of determination of a reference signal based on a first-type CC according to an embodiment of the present disclosure; and
Fig. 12 is a schematic diagram 2 of determination of a reference signal based on a first-type CC according to an embodiment of the present disclosure.

### Detailed Description

The present disclosure is described below with reference to the drawings and in conjunction with the embodiments in detail.

It is to be noted that the specification and claims of the present disclosure and the terms "first", "second" and the like in the drawings are used to distinguish similar objects, and are not used for limiting a specific sequence or a precedence order.

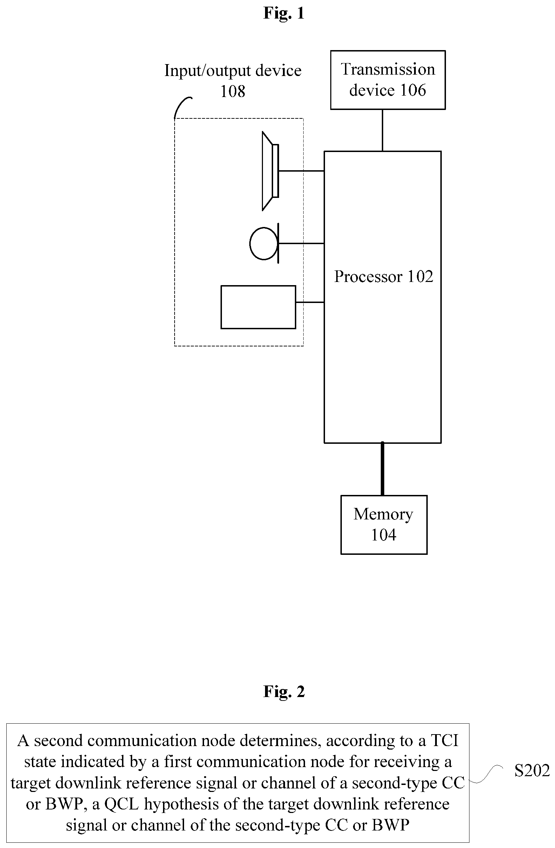

The method embodiment provided by the embodiments of the present disclosure may be implemented in a mobile terminal, a computer terminal or a similar computing device. Running on a mobile terminal is taken as an example. Fig. 1 is a block diagram of a hardware structure of a mobile terminal for implementing a QCL hypothesis determination method according to an embodiment of the present disclosure. As shown in Fig. 1, a mobile terminal 10 may include one or more (only one is shown in Fig. 1) processors 102 (the processor 102 may include but is not limited to a processing apparatus such as a Micro Controller Unit (MCU) or a Field Programmable Gate Array (FPGA)) and a memory 104 for storing data. Optionally, the above mobile terminal may further include a transmission device 106 and an input/output device 108 for communication functions. Those having ordinary skill in the art can understand that the structure shown in Fig. 1 is merely illustrative, and does not limit the structure of the above mobile terminal. For example, the mobile terminal 10 may also include more or fewer components than shown in Fig. 1, or has a different configuration from that shown in Fig. 1.

The memory 104 may be configured to store a computer program, for example, a software program and module of application software, such as a computer program corresponding to a QCL hypothesis determination method in the embodiments of the present disclosure. The processor 102 executes various functional applications and data processing, that is, implements the above method by running the computer program stored in the memory 104. The memory 104 may include a high speed random access memory and may also include a non-volatile memory such as one or more magnetic storage devices, a flash memory, or other non-volatile solid state memories. In some examples, the memory 104 may further include memories remotely located relative to the processor 102, which may be connected to the mobile terminal 10 over a network. The examples of such networks include, but are not limited to, the Internet, the Intranet, local area networks, mobile communication networks, and combinations thereof.

The transmission device 106 is configured to receive or send data via a network. The above specific network examples may include a wireless network provided by a communication provider of the mobile terminal 10. In an example, the transmission apparatus 106 includes a Network Interface Controller (NIC) that may be connected to other network devices through the base station to communicate with the Internet. In an example, the transmission device 106 may be a Radio Frequency (RF) module for communicating with the Internet wirelessly.

A QCL hypothesis determination method running on the above mobile terminal or network architecture is provided in the present embodiment. Fig. 2 is a flowchart of a QCL hypothesis determination method according to an embodiment of the present disclosure. As shown in Fig. 2, the flow includes the following operations.

In operation S202, a second communication node determines, according to a TCI state indicated by a first communication node for receiving a target downlink reference signal or channel of a second-type CC or BWP, a QCL hypothesis of the target downlink reference signal or channel of the second-type CC or BWP.

The indicated TCI state is associated with at least one of following pieces of configuration information: a first source reference signal, a second source reference signal, a set of offsets of a first source reference signal, and a set of CC or BWP indexes corresponding to offsets of a first source reference signal.

The first source reference signal refers to a source reference signal that is transmitted on a first-type CC or BWP and provides a first QCL type. The second source reference signal refers to a source reference signal that is transmitted on the first-type CC or BWP and provides a second QCL type. The first-type CC or BWP and the second-type CC or BWP are configured in a same CC group or BWP group.

In an implementation, the method of the present disclosure may further include the following operations. The second communication node determines a third source reference signal according to a preset rule and the configuration information associated with the indicated TCI state. The preset rule includes at least one of a first preset rule, a second preset rule and a third preset rule. The third source reference signal refers to a source reference signal that is transmitted on the second-type CC or BWP and provides the first QCL type for the target downlink reference signal or channel.

In an implementation of the present disclosure, the method of the present disclosure may further include the following operations. The second communication node determines the third source reference signal according to the first preset rule and the first source reference signal associated with the indicated TCI state.

The first preset rule includes at least one of the following: the first source reference signal is configured as a reference signal of the third source reference signal; the first source reference signal is configured as a reference signal of a first reference signal associated with the third source reference signal; the first source reference signal is configured in a second QCL type of a TCI state applied to the third source reference signal; the first source reference signal is configured in a second QCL type of a TCI state applied to a first reference signal associated with the third source reference signal; a second reference signal associated with the first source reference signal is configured in a second QCL type of a TCI state applied to the third source reference signal; the fourth source reference signal is configured in a second QCL type of a TCI state applied to the third source reference signal; and the fourth source reference signal is configured in a second QCL type of a TCI state applied to a first reference signal associated with the third source reference signal. The first reference signal includes a periodic CSI-RS transmitted on the second-type CC or BWP. The second reference signal includes a periodic CSI-RS transmitted on the first-type CC or BWP. The fourth source reference signal is configured in a second QCL type of a TCI state applied to the first source reference signal.

In an implementation of the present disclosure, the method of the present disclosure may further include the following operations. The second communication node determines the third source reference signal according to the second preset rule and the second source reference signal associated with the indicated TCI state.

The second preset rule includes at least one of the following: the second source reference signal is configured in a second QCL type of a TCI state applied to the third source reference signal; and the second source reference signal is configured in a second QCL type of a TCI state applied to a first reference signal associated with the third source reference signal. The first reference signal includes a periodic CSI-RS transmitted on the second-type CC or BWP. The second source reference signal is configured in a first QCL type and a second QCL type of a TCI state applied to the third source reference signal.

In an implementation of the present disclosure, the method of the present disclosure may further include the following operations. The second communication node determines the third source reference signal according to the third preset rule and the first source reference signal or the second source reference signal associated with the indicated TCI state.

The third preset rule includes at least one of the following: the first source reference signal or the second source reference signal is configured in a first QCL type of a TCI state applied to the third source reference signal; the first source reference signal or the second source reference signal is configured in a second QCL type of a TCI state applied to the third source reference signal; and the first source reference signal or the second source reference signal is configured in a first QCL type and a second QCL type of a TCI state applied to the third source reference signal.

It is to be noted that the first source reference signal or the second source reference signal includes an SSB transmitted on the first-type CC.

In an implementation of the present disclosure, the method of the present disclosure may further include the following operations. The second communication node determines the third source reference signal according to the first source reference signal associated with the indicated TCI state, the set of offsets of the first source reference signal, and the set of CC or BWP indexes corresponding to the offsets of the first source reference signal.

In an implementation of the present disclosure, the method of the present disclosure may further include the following operations. In a case where a first preset condition is satisfied, the second communication node determines a fifth source reference signal according to a reference signal configured in a second QCL type of a TCI state of a Control Resource Set (CORESET), that is used for scheduling a target downlink reference signal or channel of the second-type CC or BWP, on the first-type CC or BWP.

The fifth source reference signal refers to a source reference signal that is transmitted on the first-type CC or BWP or the second-type CC or BWP and provides a second QCL type for the target downlink reference signal or channel.

In an implementation of the present disclosure, the method of the present disclosure may further include the following operations. In a case where a first preset condition is satisfied, the second communication node determines a fifth source reference signal according to a reference signal configured in a second QCL type of a TCI state of a CORESET having a minimum CORESET ID on the first-type CC.

In an implementation of the present disclosure, the method of the present disclosure may further include the following operations. In a case where a first preset condition is satisfied, the second communication node determines, according to a candidate TCI state indicated by the first communication node for receiving the target downlink reference signal or channel of the second-type CC or BWP, a QCL hypothesis of the target downlink reference signal or channel of the second-type CC or BWP.

The candidate TCI state is associated with at least one of following pieces of configuration information: a first source reference signal, a second source reference signal, a set of offsets of a first source reference signal, and a set of CC or BWP indexes corresponding to offsets of a first source reference signal.

In an implementation of the present disclosure, the first preset condition in the present disclosure includes: a time interval between a target downlink reference signal or channel on the second-type CC or BWP and a CORESET for scheduling the target downlink reference signal or channel is smaller than a preset threshold.

In an implementation of the present disclosure, the method of the present disclosure may further include the following operations. The second communication node determines the first source reference signal and a third source reference signal according to a fourth preset rule. The third source reference signal refers to a source reference signal that is transmitted on the second-type CC or BWP and provides the first QCL type for the target downlink reference signal or channel.

The fourth preset rule includes: the first source reference signal is a CSI-RS that is transmitted on the first-type CC or BWP, has a minimum CSI-RS resource ID and is configured with TRS-Info; and the third source reference signal is a CSI-RS that is transmitted on the second-type CC or BWP, has a minimum CSI-RS resource ID and is configured with TRS-Info.

In an implementation of the present disclosure, the method of the present disclosure may further include the following operations. Before the second communication node receives the TCI state indicated by the first communication node for receiving the target downlink reference signal or channel of the second-type CC or BWP, the second communication node determines the indicated TCI state according to a first TCI state in a TCI state set configured by the first communication node for a reference CC or BWP.

The first TCI state is associated with at least one of following pieces of configuration information: a first source reference signal, a second source reference signal, a set of offsets of a first source reference signal, and a set of CC or BWP indexes corresponding to offsets of a first source reference signal. The reference CC or BWP, the first-type CC or BWP and the second-type CC or BWP are configured in a same CC group or BWP group.

In an implementation of the present disclosure, the second communication node is capable of obtaining the first TCI state according to at least one of following manners: the first TCI state is the 1st TCI state in the TCI state set; and the first communication node activates the first TCI state from the TCI state set via an activation command.

In an implementation of the present disclosure, the reference CC or BWP includes at least one of: a CC or BWP having a minimum CC or BWP index in the CC group or BWP group; a CC or BWP having a minimum interval from an index of the second-type CC or BWP in the CC group or BWP group; and a CC or BWP that is closest to a frequency domain position of the second-type CC or BWP in the CC group or BWP group.

Through the description of the above implementations, those having ordinary skill in the art can clearly understand that the method according to the above embodiment may be implemented by means of software plus a necessary general hardware platform, and of course, may also be implemented through hardware, but in many cases, the former is a better implementation. Based on such understanding, the technical solution of the present disclosure, which is essential or contributes to the conventional art, may be embodied in the form of a software product stored in a storage medium (such as a Read-Only Memory (ROM)/Random Access Memory (RAM), a magnetic disk and an optical disc), including a number of instructions for causing a terminal device (which may be a mobile phone, a computer, a server, or a network device, etc.) to perform the methods described in various embodiments of the present disclosure.

In the embodiments, a QCL hypothesis determination apparatus is also provided. The apparatus is used to implement the above embodiments and exemplary implementations, and those have not been described will not be elaborated. As used below, the term "module" may implement a combination of software and/or hardware of a predetermined function. Although the apparatus described in the following embodiments is preferably implemented by software, hardware or a combination of software and hardware is also possible and conceived.

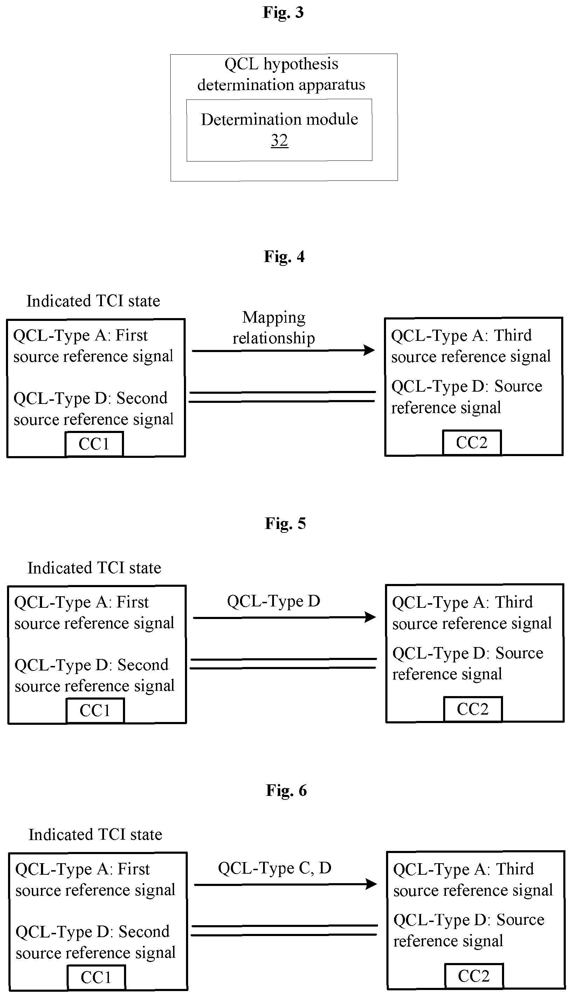

Fig. 3 is a structural schematic diagram of a QCL hypothesis determination apparatus according to the present disclosure. The apparatus is applied to a second communication node side. As shown in Fig. 3, the apparatus includes: a determination module 32.

The determination module 32 is configured to determine, according to a TCI state indicated by a first communication node for receiving a target downlink reference signal or channel of a second-type CC or BWP, a QCL hypothesis of the target downlink reference signal or channel of the second-type CC or BWP.

The indicated TCI state is associated with at least one of following pieces of configuration information: a first source reference signal, a second source reference signal, a set of offsets of a first source reference signal, and a set of CC or BWP indexes corresponding to offsets of a first source reference signal.

The first source reference signal refers to a source reference signal that is transmitted on a first-type CC or BWP and provides a first QCL type. The second source reference signal refers to a source reference signal that is transmitted on the first-type CC or BWP and provides a second QCL type. The first-type CC or BWP and the second-type CC or BWP are configured in a same CC group or BWP group.

It is to be noted that each of the above modules may be implemented by software or hardware. For the latter, it may be implemented by, but not limited to, the following manners that the above modules are all located in the same processor; or, the above modules are located in different processors in any combination form respectively.

Examples 1 to 8 of the present disclosure are illustrated below in conjunction with some examples of the present disclosure.

### Example 1

In the present example, a CC or BWP group configuration method is provided. The configuration mode of a CC or BWP group may include at least one of the following:
1) All CCs or BWPs within a broadband are designated as one CC or BWP group.
2) A base station configures the CC or BWP group via RRC signaling.
3) A UE is capable of reporting the CC or BWP group. For example, different CCs or BWPs send downlink reference signals or channels (such as CSI-RS, PDCCH and PDSCH) to the same UE. If these downlink channels or signals overlap at a time domain position (overlap, e.g. at an initial position), the UE may report CC or BWP indexes associated with these downlink channels or signals, i.e. the CC or BWP group includes CCs or BWPs corresponding to these CC or BWP indexes.
4) The UE reports the CC or BWP group after measurement. For example, after measuring CSI, the UE finds that some CCs or BWPs have the same optimal receiving beam, and then the UE may report these CCs or BWP indexes, i.e. the CC or BWP group includes CCs or BWPs corresponding to these CCs or BWP indexes.

Further, the number of CCs or BWPs included in one CC or BWP group is smaller than or equal to Nₘₐₓ, where Nₘₐₓ refers to a maximum number of CCs or BWPs supportable by the UE.

Note: for convenience of description, CC referred to in the following embodiments represents a CC or BWP, and CC group represents a CC or BWP group.

It is to be noted that Examples 2 to 5 relate to a QCL hypothesis determination method for, but not limited to, a PDSCH. The method is also applicable to a PDCCH, and the determination of QCL hypothesis of a CSI-RS used for obtaining CSI.

### Example 2

The present example provides a QCL hypothesis determination method for a PDSCH of a CC group. It is assumed that a CC group includes CC1 and CC2. SSB 1 and CSI-RS1 are transmitted on CC1, and CSI-RS2 is transmitted on CC2. A base station indicates one TCI state for receiving a target PDSCH of the CC group. The TCI state is associated with the following configuration information: a first source reference signal and a second source reference signal. The first source reference signal refers to a source reference signal that is transmitted on a first-type CC and provides a first QCL type, and the second source reference signal refers to a source reference signal that is transmitted on the first-type CC and provides a second QCL type. It is assumed here that the first source reference signal and the second source reference signal are respectively SSB1 and CSI-RS1. The first-type CC may be a CC with a minimum CC index in the CC group or a primary serving cell (PCell), i.e. CC1. The first QCL type refers to QCL-Type A, indicating that the target reference signal and the source reference signal have the same demodulation parameters (such as Doppler frequency shift, Doppler spread, average delay, and delay spread). The second QCL type refers to QCL-Type D, indicating that the target reference signal and the source reference signal have the same receiving space parameter, i.e. having the same receiving beam. SSB1 is configured in QCL-Type D applied to CSI-RS1, i.e. SSB1 and CSI-RS1 have the same receiving beam. After a UE receives the above indicated TCI state, SSB1 provides QCL-Type D for a target PDSCH of the first-type CC and the second-type CC (i.e. a source reference signal of QCL-Type D of the target PDSCH of the second-type CC is determined according to a second source reference signal, and is also SSB1, which is applicable to Examples 2 to 5). The second-type CC may be a CC other than the first-type CC in the CC group, such as CC2, i.e. the PDSCH of the first-type CC and the PDSCH of the second-type CC have the same receiving beam as SSB1. CSI-RS1 provides QCL-Type A for the target PDSCH of the first-type CC, i.e. the target PDSCH of the first-type CC has the same demodulation parameter as CSI-RS1. For the first QCL type of the target PDSCH of the second-type CC, such as QCL-Type A, the UE may determine a third source reference signal according to a first preset rule and the first source reference signal (SSB1) associated with the indicated TCI state. The third source reference signal is transmitted on CC2 (assumed to be CSI-RS2), and provides QCL-Type A for the target PDSCH of the second-type CC, i.e. the target PDSCH of the second-type CC and CSI-RS2 have the same demodulation parameter.

Further, the first preset rule may include at least one of the following:
1) The first source reference signal (SSB1) is configured as a reference signal of the third source reference signal (CSI-RS2). In other words, SSB1 has a mapping relationship with CSI-RS2, as shown in Fig. 4.
2) The first source reference signal (SSB1) is configured in QCL-Type D of a TCI state applied to the third source reference signal (CSI-RS2), as shown in Fig. 5.
3) The first source reference signal (SSB1) is configured in QCL-Type C and QCL-Type D of a TCI state applied to the third source reference signal (CSI-RS2), as shown in Fig. 6. QCL-Type C represents that the target downlink reference signal and channel and the source reference signal have the same synchronization parameters (such as average delay and Doppler frequency shift).

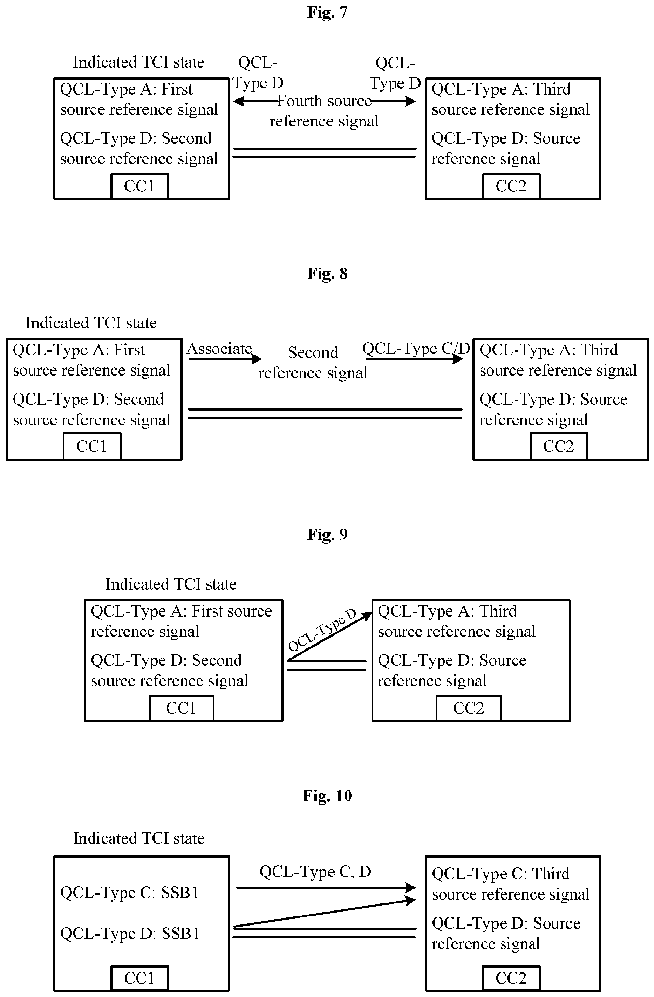

If the first source reference signal is CSI-RS3 transmitted on CC1 and SSB1 (assumed to be a fourth source reference signal) is configured in QCL-Type D of a TCI state applied to the first source reference signal (CSI-RS3), then the UE may determine the third source reference signal according to the fourth source reference signal (SSB1) associated with the indicated TCI state and the following (first) preset rule:
4) The fourth source reference signal (SSB1) is configured in QCL-Type D applied to the third source reference signal (CSI-RS2), as shown in Fig. 7.

Further, if CSI-RS2 is a non-periodic CSI-RS and is associated with a periodic reference signal CSI-RS4, then the UE may determine the third source reference signal according to the first source reference signal (SSB 1) associated with the indicated TCI state and the following (first) preset rule:
5) Similar to criterion 1), the first source reference signal (SSB1) is configured as a reference signal of the first reference signal (CSI-RS4) associated with the third source reference signal (CSI-RS2). In other words, SSB1 has a mapping relationship with CSI-RS4.
6) Similar to criterion 2), the first source reference signal (SSB1) is configured in QCL-Type D of a TCI state applied to the first reference signal (CSI-RS4) associated with the third source reference signal (CSI-RS2).
7) Similar to criterion 4), the fourth source reference signal (SSB1) is configured in QCL-Type D applied to the first reference signal (CSI-RS4) associated with the third source reference signal (CSI-RS2).

Further, if the first source reference signal is CSI-RS5 and is associated with a second reference signal CSI-RS6 (e.g. periodic CSI-RS6), and the third source reference signal CSI-RS2 is a non-periodic CSI-RS, then the UE may determine the third source reference signal according to the first source reference signal (CSI-RS5) associated with the indicated TCI state and the following (first) preset rule:
8) The second reference signal (CSI-RS6) associated with the first source reference signal (CSI-RS5) is configured in QCL-Type C applied to the third source reference signal (CSI-RS2), as shown in Fig. 8.
9) The second reference signal (CSI-RS6) associated with the first source reference signal (CSI-RS5) is configured in QCL-Type D applied to the third source reference signal (CSI-RS2), as shown in Fig. 8.

Secondly, the UE may also determine the third source reference signal according to the second source reference signal (CSI-RS1) associated with the indicated TCI state and a second preset rule.

Further, the second preset rule may include at least one of the following:
1) The second source reference signal (CSI-RS1) is configured in QCL-Type D of a TCI state applied to the third source reference signal (CSI-RS2), as shown in Fig. 9.
   Further, if a time domain type of CSI-RS2 is configured to be non-periodic and is associated with a periodic reference signal CSI-RS7, then the UE may determine the third source reference signal according to the second source reference signal (CSI-RS1) associated with the indicated TCI state and the following (second) preset rule:
2) Similar to criterion 1), the second source reference signal (CSI-RS1) is configured in QCL-Type D of a TCI state applied to the third reference signal (CSI-RS7) associated with the third source reference signal (CSI-RS2).

### Example 3

The present example provides a QCL hypothesis determination method for a PDSCH of a CC group. It is assumed that a CC group includes CC1 and CC2. SSB1 is transmitted on CC1, and CSI-RS1 is transmitted on CC2. A base station indicates one TCI state for receiving a target PDSCH of the CC group. The TCI state is associated with the following configuration information: a first source reference signal and a second source reference signal. The first source reference signal refers to a source reference signal that is transmitted on a first-type CC and provides a first QCL type, and the second source reference signal refers to a source reference signal that is transmitted on the first-type CC and provides a second QCL type. It is assumed here that the first source reference signal and the second source reference signal are both SSB1. The first-type CC may be a CC with a minimum CC index in the CC group or a primary serving cell (PCell), i.e. CC1. The first QCL type refers to QCL-Type C. The second QCL type refers to QCL-Type D. After a UE receives the above indicated TCI state, SSB1 provides QCL-Type D for a target PDSCH of the first-type CC and the second-type CC. The second-type CC may be a CC other than the first-type CC in the CC group, i.e. the PDSCH of the first-type CC and the PDSCH of the second-type CC have the same receiving beam as SSB1. SSB1 provides QCL-Type C for the target PDSCH of the first-type CC, i.e. the target PDSCH of the first-type CC has the same synchronization parameter as SSB1. For the first QCL type of the target PDSCH of the second-type CC, such as QCL-Type C, the UE may determine a third source reference signal according to the first source reference signal or second source reference signal (SSB1) associated with the indicated TCI state and a third preset rule. The third source reference signal is transmitted on CC2 (assumed to be CSI-RS1), and provides QCL-Type C for the target PDSCH of the second-type CC, i.e. the target PDSCH of the second-type CC and CSI-RS1 have the same synchronization parameter.

Further, the third preset rule may include at least one of the following:
1) The first reference signal (SSB1) or the second source reference signal (SSB1) is configured in QCL-Type C of the third source reference signal (CSI-RS1).
2) The first reference signal (SSB1) or the second source reference signal (SSB1) is configured in QCL-Type D of the third source reference signal (CSI-RS1).
3) The first reference signal (SSB1) or the second source reference signal (SSB1) is configured in QCL-Type C and QCL-Type D of the third source reference signal (CSI-RS1), as shown in Fig. 10.

Further, the first source reference signal and the second source reference signal can only include SSBs.

### Example 4

The present example provides a QCL hypothesis determination method for a PDSCH of a CC group. It is assumed that a CC group includes CC1 and CC2. CSI-RS1 and CSI-RS2 are transmitted on CC1, and CSI-RS3 is transmitted on CC2. CSI-RS1 and CSI-RS3 are from the same CSI-RS set. A base station indicates one TCI state for receiving a target PDSCH of the CC group. The TCI state is associated with the following configuration information: a first source reference signal (CSI-RS1), a second source reference signal (CSI-RS2), a set of offsets {2} of the first source reference signal, and a set of CC indexes {2} corresponding to the offsets of the first source reference signal. The first source reference signal refers to a source reference signal that is transmitted on a first-type CC and provides a first QCL type, and the second source reference signal refers to a source reference signal that is transmitted on the first-type CC and provides a second QCL type. The first-type CC may be a CC with a minimum CC index in the CC group or a primary serving cell (PCell), i.e. CC1. The first QCL type refers to QCL-Type A or QCL-Type C (it is assumed here that the first QCL type refers to QCL-Type A), and the second QCL type refers to QCL-Type D. The CCs included in a set of CC indexes corresponding to the offsets of the first source reference signal belong to a second-type CC. The first source reference signal indicates a difference value between third source reference signal indexes of these CCs and first source reference signal indexes, and elements included in the set of offsets of the first source reference signal are in one-to-one correspondence with elements included in the set of CCs indexes corresponding to the offsets of the first source reference signal. The third source reference signal is transmitted on the second-type CC, and provides a source reference signal of a first QCL type for a target PDSCH of the second-type CC. Further, the third source reference signal belongs to the same set of reference signals as the first source reference signal. After a UE receives the above indicated TCI state, CSI-RS2 provides QCL-Type D for a target PDSCH of the first-type CC and the second-type CC, i.e. the PDSCH of the first-type CC and the PDSCH of the second-type CC have the same receiving beam as CSI-RS2. The second-type CC may be a CC other than the first-type CC in the CC group. CSI-RS 1 provides QCL-Type A for the target PDSCH of the first-type CC, i.e. the target PDSCH of the first-type CC has the same demodulation parameter as CSI-RS 1. For the first QCL type, such as QCL-Type A, of the target PDSCH of the second-type CC, the UE may determine a third source reference signal according to the first source reference signal, the set of offsets of the first source reference signal and the set of CC indexes corresponding to the offsets of the first source reference signal, which are associated with the indicated TCI state. As an exemplary implementation, according to a set of CC indexes {2} corresponding to the offsets of the first source reference signal and a set of offsets {2} of the first source reference signal, it can be obtained that the third source reference signal is CSI-RS1+2 transmitted on CC2, i.e. CSI-RS3.

### Example 5

The present example provides a QCL hypothesis determination method for a PDSCH of a CC group. It is assumed that a CC group includes CC1 and CC2. CSI-RS1, CSI-RS2, CSI-RS3, CSI-RS4 and CSI-RS5 are transmitted on CC1, and CSI-RS6, CSI-RS7, CSI-RS8, CSI-RS9 and CSI-RS10 are transmitted on CC2. CSI-RS1, CSI-RS2, CSI-RS3, CSI-RS6, CSI-RS7 and CSI-RS8 are configured with TRS-Info. A base station indicates one TCI state for receiving a target PDSCH of the CC group. The TCI state is associated with the following configuration information: a first source reference signal and a second source reference signal (CSI-RS3). The first source reference signal refers to a source reference signal that is transmitted on a first-type CC and provides a first QCL type (e.g. QCL-Type A), and the second source reference signal refers to a source reference signal that is transmitted on the first-type CC and provides a second QCL type (e.g. QCL-Type D). The first-type CC may be a CC with a minimum CC index in the CC group or a primary serving cell (PCell), i.e. CC1. After a UE receives the above indicated TCI state, CSI-RS2 provides QCL-Type D for a target PDSCH of the first-type CC and the second-type CC, i.e. the PDSCH of the first-type CC and the PDSCH of the second-type CC have the same receiving beam as CSI-RS2. The second-type CC may be a CC other than the first-type CC in the CC group. For QCL-Type A of the target PDSCH of the first-type CC and the second-type CC, the UE may determine the first source reference signal and a third source reference signal according to a fourth preset rule. The third source reference signal provides QCL-Type C for the target PDSCH of the second-type CC, i.e. the target PDSCH of the second-type CC and the third source reference signal have the same synchronization parameter.

Further, the fourth preset rule includes:
1) The first source reference signal is a CSI-RS that is transmitted on the first-type CC, has a minimum CSI-RS resource ID and is configured with TRS-Info.
2) The third source reference signal is a CSI-RS that is transmitted on the second-type CC, has a minimum CSI-RS resource ID and is configured with TRS-Info.

Therefore, the UE may determine that the first source reference signal is CSI-RS1 and the third source reference signal is CSI-RS5 according to the fourth preset rule.

### Example 6

The present example provides a TCI state obtaining method. The exemplary implementation may be applied to the cases of Examples 2 to 5, but is not limited to the cases involved in these examples.

Before a base station indicates a TCI state for receiving a target PDSCH of a second-type CC, a UE may obtain the indicated TCI state according to a first TCI state in a TCI state set configured by the base station for a reference CC. The reference CC belongs to the same CC group as the first-type CC and the second-type CC involved in Examples 2 to 5. The first TCI state is associated with at least one of following pieces of configuration information: a first source reference signal, a second source reference signal, a set of offsets of a first source reference signal, and a set of CC or BWP indexes corresponding to offsets of a first source reference signal.

Further, the UE may obtain the first TCI state according to at least one of following manners:
1) The first TCI state is the 1st TCI state in the TCI state set.
2) The base station activates one TCI state, i.e. the first TCI state, from the TCI state set via one activation command (e.g. MAC-CE signaling).

Further, the reference CC may include at least one of:
a CC with a minimum CC index in the CC group;
a CC with a minimum interval from an index of the second-type CC in the CC group; and
a CC that is closest to a frequency domain position of the second-type CC in the CC group.

### Example 7

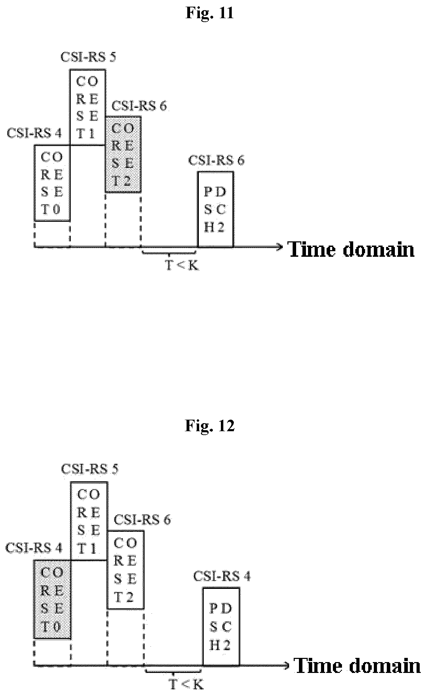

The present example provides a QCL hypothesis determination method for a PDSCH. It is assumed that a CC group includes CC1 and CC2. A UE is configured with three CORESETs: CORESET0, CORESET1 and CORESET2. These CORESETs are on CC1, and DCI located on CORESET2 is used for scheduling PDSCH1 on CC1 and PDSCH2 on CC2. TCI states respectively indicated by a base station for receiving CORESET0, CORESET1 and CORESET2 are TCI state 1, TCI state 2 and TCI state 3. TCI state 1 is associated with the following configuration information: a fifth source reference signal (assumed to be CSI-RS1) and a sixth source reference signal (assumed to be CSI-RS4). TCI state 2 is associated with the following configuration information: a fifth source reference signal (assumed to be CSI-RS2) and a sixth source reference signal (assumed to be CSI-RS5). TCI state 3 is associated with the following configuration information: a fifth source reference signal (assumed to be CSI-RS3) and a sixth source reference signal (assumed to be CSI-RS6). The fifth source reference signal refers to a source reference signal that is transmitted on a first-type CC and provides a first QCL type (e.g. QCL-Type A), and the sixth source reference signal refers to a source reference signal that is transmitted on the first-type CC and provides a second QCL type (e.g. QCL-Type D). The first-type CC may be a CC with a minimum CC index in a CC group or a primary serving cell (PCell), i.e. CC1. In a case where a first preset condition is satisfied, the UE may determine a seventh source reference signal according to the sixth source reference signal (CSI-RS6) associated with TCI state 3 of CORESET2 for scheduling a PDSCH on CC2 on the first-type CC, as shown in Fig. 11, i.e. PDSCH2 and CSI-RS6 have the same receiving beam. The seventh source reference signal refers to a source reference signal providing QCL-Type D for target PDSCH2 of a second-type CC. The second-type CC may be a CC (e.g. CC2) other than the first-type CC in the CC group.

In addition, as shown in Fig. 12, the UE may determine the seventh source reference signal according to the sixth source reference signal (CSI-RS4) associated with TCI state 1 of CORFSFT0 with a minimum CORESET ID on the first-type CC, i.e. PDSCH2 and CSI-RS4 have the same receiving beam. The closest distance refers to the closest distance to the target PDSCH in a time domain.

Further, the first preset condition includes: a time interval (or scheduling offset) T between a target PDSCH of the second-type CC and a CORESET for scheduling the target PDSCH is smaller than a preset threshold K.

### Example 8

The present example provides a QCL hypothesis determination method for a PDSCH of a CC group. It is assumed that a CC group includes CC1 and CC2. A base station indicates one TCI state for receiving a target PDSCH of the CC group (referred to herein as a primary TCI state temporarily), and also indicates one candidate TCI state. Both the primary TCI state and the candidate TCI state are associated with at least one of the following configuration information: a first source reference signal, a second source reference signal, a set of offsets of a first source reference signal, and a set of CC indexes corresponding to the offsets of the first source reference signal. In a case where a first preset condition is satisfied, a UE may determine the third source reference signal involved in Examples 2-5 according to the configuration information associated with the indicated candidate TCI state and the first, second, third and fourth criteria involved in Examples 2-5.

Further, the first preset condition includes: a time interval (or scheduling offset) T between a target PDSCH of the second-type CC and a CORESET for scheduling the target PDSCH is smaller than a preset threshold K.

An embodiment of the present disclosure also provides a storage medium. The storage medium has a computer program stored therein, wherein the computer program, when run, is configured to perform the operations in any one of the above method embodiments.

As an exemplary implementation of the present embodiment, the storage medium may be configured to store a computer program for performing the following operations.

At S1, according to a TCI state indicated by a first communication node for receiving a target downlink reference signal or channel of a second-type CC or BWP, a QCL hypothesis of the target downlink reference signal or channel of the second-type CC or BWP is determined.

As an exemplary implementation of the present embodiment, the storage medium may include, but is not limited to, various media capable of storing a computer program such as a U disk, a ROM, a RAM, a mobile hard disk, a magnetic disk or an optical disc.

An embodiment of the present disclosure also provides an electronic apparatus, which includes a memory and a processor. The memory stores a computer program. The processor is configured to run the computer program to perform the operations in any one of the above method embodiments.

As an exemplary implementation, the electronic apparatus may further include a transmission device and an input/output device, where the transmission device is connected to the processor, and the input/output device is connected to the processor.

As an exemplary implementation of the present embodiment, the processor may be configured to perform the following operations through the computer program.

At S1, according to a TCI state indicated by a first communication node for receiving a target downlink reference signal or channel of a second-type CC or BWP, a QCL hypothesis of the target downlink reference signal or channel of the second-type CC or BWP is determined. It is apparent that those having ordinary skill in the art should appreciate that the above modules and operations of the present disclosure may be implemented by a general-purpose computing device (e.g. a processor), and they may be centralized in a single computing device or distributed on a network composed of multiple computing devices. Optionally, they may be implemented by a program code which is capable of being executed by the computing device, so that they may be stored in a storage device and executed by the computing device; and in some situations, the presented or described operations may be executed in an order different from that described here; or they are made into integrated circuit modules, respectively; or multiple modules and operations of them are made into a single integrated circuit module to realize. Therefore, the present disclosure is not limited to any particular combination of hardware and software.

The scope of protection of the invention is limited by the appended claims.

## Claims

1. A Quasi-Colocation, QCL, hypothesis determination method, performed by a second communication node, the method comprising:
receving, by the second communication node, information about one Transmission Configuration Indicator, TCI, state sent by a first communication node, wherein the one TCI state corresponds to a component carrier, CC, group;
determining, by the second communication node, according to the one TCI state, a QCL parameter of target downlink reference signals in the CC group,
wherein the CC group at least comprises a first CC and a second CC which is configured by a RRC signaling sent by the first communication node, and the target downlink reference signals include a first target downlink reference signal received on the first CC and a second target downlink reference signal received on the second CC;
wherein the one TCI state is associated with following pieces of configuration information: a first source reference signal and a second source reference signal,
wherein the first source reference signal refers to a source reference signal that is received on the first CC and provides a first QCL type parameter for the first target downlink reference signal; the second source reference signal refers to a source reference signal that is received on the first CC and provides a second QCL type parameter for the first target downlink reference signal,
wherein the first QCL type parameter comprises a QCL-Type A which comprises following QCL hypothesis: Doppler frequency shift, Doppler spread, average delay, and delay spread; and the second QCL type parameter comprises a QCL-Type D which comprises QCL hypothesis of receiving space parameter.

2. The method according to claim 1, wherein
the second communication node determines a third source reference signal according to a first preset rule and the first source reference signal associated with the one TCI state,
wherein the third source reference signal refers to a source reference signal that is transmitted on the second CC and provides the first QCL type parameter for the second target downlink reference signal or channel.

3. The method according to claim 2, wherein the first preset rule comprises:
the first source reference signal is configured as a reference signal of the third source reference signal, and there is a mapping relationship between the first source reference signal and the third source reference signal.

4. The method according to claim 1, wherein
the second communication node determines a third source reference signal according to a third preset rule and the first source reference signal or the second source reference signal associated with the one TCI state,
wherein the third source reference signal refers to a source reference signal that is transmitted on the second CC and provides the first QCL type parameter for the second target downlink reference signal.

5. The method according to claim 4, wherein the third preset rule comprises at least one of the following:
the first source reference signal or the second source reference signal is configured in the first QCL type parameter of another TCI state applied to the third source reference signal; or
the first source reference signal or the second source reference signal is configured in the second QCL type parameter of another TCI state applied to the third source reference signal.

6. The method according to claim 5, wherein
the first source reference signal or the second source reference signal comprises a Synchronization Signal Block, SSB, transmitted on the first CC.

7. The method according to claim 1, wherein
the second communication node determines a third source reference signal according to the first source reference signal associated with the one TCI state, a set of offsets associated with the first source reference signal, and a CC index of each CC of the CC groups, wherein the CC group corresponds to the set of offsets,
wherein the third source reference signal refers to a source reference signal that is transmitted on the second CC and provides the first QCL type parameter for the second target downlink reference signal,
wherein each offset of the set of offsets associated with the first source reference signal comprises source index offset between the first source reference signal and the third source reference signal.

8. The method according to claim 1, wherein
the second communication node determines the first source reference signal and a third source reference signal according to a fourth preset rule,
wherein the third source reference signal refers to a source reference signal that is transmitted on the second CC and provides the first QCL type parameter for the second target downlink reference signal.

9. The method according to claim 1, wherein
before the second communication node receives the one TCI state indicated by the first communication node for receiving the target downlink reference signals in the CC group, the second communication node determines the one TCI state according to a first TCI state in a TCI state set configured by the first communication node for a reference CC,
wherein the first TCI state is associated with following configuration information: the first source reference signal, the second source reference signal; and the reference CC, the first CC and the second CC are configured in the CC group.

10. A Quasi-Colocation, QCL, hypothesis determination method, performed by a first communication node, the method comprising:
sending, by the first communication node, a RRC signaling configuration which information about a group of component carriers, CCs, wherein the CC group at least comprises a first CC and a second CC,
sending, by the first communication node, one Transmission Configuration Indication, TCI, state to a second communication node, wherein the one TCI state corresponds to the group of component carriers;
wherein the TCI state is used for the second communication node to determine a QCL parameter of a target downlink reference signals in the CC group, and the target downlink reference signals include a first target downlink reference signal transmitted on the first CC, and a second target downlink reference signal transmitted on the second CC;
sending, by the first communication node, the target downlink reference signal of the second CC to the second communication node according to the QCL hypothesis;
wherein the one TCI state is associated with following pieces of configuration information: a first source reference signal and a second source reference signal,
wherein the first source reference signal refers to a source reference signal that is transmitted on a first CC and provides a first QCL type parameter for the first target downlink reference signal; the second source reference signal refers to a source reference signal that is transmitted on the first CC and provides a second QCL type parameter for the first target downlink reference signal;
wherein the first QCL type parameter comprises a QCL-Type A which comprises following QCL hypothesis: Doppler frequency shift, Doppler spread, average delay, and delay spread; and the second QCL type parameter comprises a QCL-Type D which comprises QCL hypothesis of receiving space parameter.

11. The method according to claim 10, wherein
the first communication node determines a third source reference signal according to a first preset rule and the first source reference signal associated with the one TCI state,
wherein the third source reference signal refers to a source reference signal that is transmitted on the second CC and provides the first QCL type parameter for the second target downlink reference signal.

12. The method according to claim 10, wherein
the first communication node determines a third source reference signal according to a third preset rule and the first source reference signal or the second source reference signal associated with the one TCI state,
wherein the third source reference signal refers to a source reference signal that is transmitted on the second CC and provides the first QCL type parameter for the second target downlink reference signal.

13. The method according to claim 10, wherein
the first communication node determines a third source reference signal according to the first source reference signal associated with the one TCI state, a set of offsets of the first source reference signal, and a set of CC indexes corresponding to the offsets of the first source reference signal,
wherein the third source reference signal refers to a source reference signal that is transmitted on the second CC and provides the first QCL type parameter for the second target downlink reference signal ,
wherein the offset of the first source reference signal comprises source index offset between the first source reference signal and the third source reference signal;
and/or,
the second communication node determines the first source reference signal and a third source reference signal according to a fourth preset rule, wherein the third source reference signal refers to a source reference signal that is transmitted on the second CC and provides the first QCL type parameter for the second target downlink reference signal.

14. An electronic apparatus, comprising a memory and a processor, wherein the memory stores a computer program, and the processor is configured to run the computer program to execute the method according to any one of claims 1 to 13.

## Patentansprüche

1. Verfahren zur Bestimmung einer Quasi-Kollokations-, QCL-, Hypothese, das von einem zweiten Kommunikationsknoten durchgeführt wird, wobei das Verfahren umfasst:
Empfangen, durch den zweiten Kommunikationsknoten, von Informationen über einen Übertragungskonfigurationsindikator-, TCI-, Zustand, der von einem ersten Kommunikationsknoten gesendet wird, wobei der eine TCI-Zustand einer Komponententräger-, CC-, Gruppe entspricht;
Bestimmen, durch den zweiten Kommunikationsknoten, gemäß dem einen TCI-Zustand, eines QCL-Parameters von Ziel-Downlink-Referenzsignalen in der CC-Gruppe,
wobei die CC-Gruppe zumindest einen ersten CC und einen zweiten CC umfasst, der durch eine von dem ersten Kommunikationsknoten gesendete RRC-Signalisierung konfiguriert ist, und die Ziel-Downlink-Referenzsignale ein erstes Ziel-Downlink-Referenzsignal, das auf dem ersten CC empfangen wird, und ein zweites Ziel-Downlink-Referenzsignal, das auf dem zweiten CC empfangen wird, umfassen;
wobei der eine TCI-Zustand mit folgenden Konfigurationsinformationen verknüpft ist: einem ersten Quellreferenzsignal und einem zweiten Quellreferenzsignal,
wobei sich das erste Quellreferenzsignal auf ein Quellreferenzsignal bezieht, das auf dem ersten CC empfangen wird und einen ersten QCL-Typparameter für das erste Ziel-Downlink-Referenzsignal bereitstellt; sich das zweite Quellreferenzsignal auf ein Quellreferenzsignal bezieht, das auf dem ersten CC empfangen wird und einen zweiten QCL-Typparameter für das erste Ziel-Downlink-Referenzsignal bereitstellt,
wobei der erste QCL-Typparameter einen QCL-Typ A umfasst, der folgende QCL-Hypothesen umfasst: Doppler-Frequenzverschiebung, Doppler-Spreizung, mittlere Verzögerung und Verzögerungsspreizung; und der zweite QCL-Typparameter einen QCL-Typ D umfasst, der die QCL-Hypothese eines räumlichen Empfangsparameters umfasst.

2. Verfahren nach Anspruch 1, wobei
der zweite Kommunikationsknoten ein drittes Quellreferenzsignal gemäß einer ersten voreingestellten Regel und dem ersten Quellreferenzsignal, das mit dem einen TCI-Zustand verknüpft ist, bestimmt,
wobei sich das dritte Quellreferenzsignal auf ein Quellreferenzsignal bezieht, das auf dem zweiten CC übertragen wird und den ersten QCL-Typparameter für das zweite Ziel-Downlink-Referenzsignal oder den Kanal bereitstellt.

3. Verfahren nach Anspruch 2, wobei die erste voreingestellte Regel umfasst:
das erste Quellreferenzsignal ist als ein Referenzsignal des dritten Quellreferenzsignals konfiguriert, und es besteht eine Abbildungsbeziehung zwischen dem ersten Quellreferenzsignal und dem dritten Quellreferenzsignal.

4. Verfahren nach Anspruch 1, wobei
der zweite Kommunikationsknoten ein drittes Quellreferenzsignal gemäß einer dritten voreingestellten Regel und dem ersten Quellreferenzsignal oder dem zweiten Quellreferenzsignal, das mit dem einen TCI-Zustand verknüpft ist, bestimmt,
wobei sich das dritte Quellreferenzsignal auf ein Quellreferenzsignal bezieht, das auf dem zweiten CC übertragen wird und den ersten QCL-Typparameter für das zweite Ziel-Downlink-Referenzsignal bereitstellt.

5. Verfahren nach Anspruch 4, wobei die dritte voreingestellte Regel mindestens eines der Folgenden umfasst:
das erste Quellreferenzsignal oder das zweite Quellreferenzsignal ist in dem ersten QCL-Typparameter eines anderen TCI-Zustands konfiguriert, der auf das dritte Quellreferenzsignal angewendet wird; oder
das erste Quellreferenzsignal oder das zweite Quellreferenzsignal ist in dem zweiten QCL-Typparameter eines anderen TCI-Zustands konfiguriert, der auf das dritte Quellreferenzsignal angewendet wird.

6. Verfahren nach Anspruch 5, wobei
das erste Quellreferenzsignal oder das zweite Quellreferenzsignal einen Synchronisationssignalblock, SSB, umfasst, der auf dem ersten CC übertragen wird.

7. Verfahren nach Anspruch 1, wobei
der zweite Kommunikationsknoten ein drittes Quellreferenzsignal gemäß dem ersten Quellreferenzsignal, das mit dem einen TCI-Zustand verknüpft ist, einem Satz von Versätzen, der mit dem ersten Quellreferenzsignal verknüpft ist, und einem CC-Index jedes CC der CC-Gruppen bestimmt, wobei die CC-Gruppe dem Satz von Versätzen entspricht,
wobei sich das dritte Quellreferenzsignal auf ein Quellreferenzsignal bezieht, das auf dem zweiten CC übertragen wird und den ersten QCL-Typparameter für das zweite Ziel-Downlink-Referenzsignal bereitstellt,
wobei jeder Versatz des Satzes von Versätzen, der mit dem ersten Quellreferenzsignal verknüpft ist, einen Quellindexversatz zwischen dem ersten Quellreferenzsignal und dem dritten Quellreferenzsignal umfasst.

8. Verfahren nach Anspruch 1, wobei
der zweite Kommunikationsknoten das erste Quellreferenzsignal und ein drittes Quellreferenzsignal gemäß einer vierten voreingestellten Regel bestimmt,
wobei sich das dritte Quellreferenzsignal auf ein Quellreferenzsignal bezieht, das auf dem zweiten CC übertragen wird und den ersten QCL-Typparameter für das zweite Ziel-Downlink-Referenzsignal bereitstellt.

9. Verfahren nach Anspruch 1, wobei
bevor der zweite Kommunikationsknoten den einen TCI-Zustand empfängt, der von dem ersten Kommunikationsknoten zum Empfangen der Ziel-Downlink-Referenzsignale in der CC-Gruppe angegeben wird, der zweite Kommunikationsknoten den einen TCI-Zustand gemäß einem ersten TCI-Zustand in einem TCI-Zustandssatz bestimmt, der von dem ersten Kommunikationsknoten für einen Referenz-CC konfiguriert ist,
wobei der erste TCI-Zustand mit folgenden Konfigurationsinformationen verknüpft ist: dem ersten Quellreferenzsignal, dem zweiten Quellreferenzsignal; und wobei der Referenz-CC, der erste CC und der zweite CC in der CC-Gruppe konfiguriert sind.

10. Verfahren zur Bestimmung einer Quasi-Kollokations-, QCL-, Hypothese, das von einem ersten Kommunikationsknoten durchgeführt wird, wobei das Verfahren umfasst:
Senden, durch den ersten Kommunikationsknoten, einer RRC-Signalisierungskonfigurationsinformation über eine Gruppe von Komponententrägern, CCs, wobei die CC-Gruppe zumindest einen ersten CC und einen zweiten CC umfasst,
Senden, durch den ersten Kommunikationsknoten, eines Übertragungskonfigurationsindikator-, TCI-, Zustands an einen zweiten Kommunikationsknoten, wobei der eine TCI-Zustand der Gruppe von Komponententrägern entspricht;
wobei der TCI-Zustand für den zweiten Kommunikationsknoten verwendet wird, um einen QCL-Parameter von Ziel-Downlink-Referenzsignalen in der CC-Gruppe zu bestimmen, und die Ziel-Downlink-Referenzsignale ein erstes Ziel-Downlink-Referenzsignal, das auf dem ersten CC übertragen wird, und ein zweites Ziel-Downlink-Referenzsignal, das auf dem zweiten CC übertragen wird, umfassen;
Senden, durch den ersten Kommunikationsknoten, des Ziel-Downlink-Referenzsignals des zweiten CC an den zweiten Kommunikationsknoten gemäß der QCL-Hypothese;
wobei der eine TCI-Zustand mit folgenden Konfigurationsinformationen verknüpft ist: einem ersten Quellreferenzsignal und einem zweiten Quellreferenzsignal,
wobei sich das erste Quellreferenzsignal auf ein Quellreferenzsignal bezieht, das auf einem ersten CC übertragen wird und einen ersten QCL-Typparameter für das erste Ziel-Downlink-Referenzsignal bereitstellt; sich das zweite Quellreferenzsignal auf ein Quellreferenzsignal bezieht, das auf dem ersten CC übertragen wird und einen zweiten QCL-Typparameter für das erste Ziel-Downlink-Referenzsignal bereitstellt;
wobei der erste QCL-Typparameter einen QCL-Typ A umfasst, der folgende QCL-Hypothesen umfasst: Doppler-Frequenzverschiebung, Doppler-Spreizung, mittlere Verzögerung und Verzögerungsspreizung; und der zweite QCL-Typparameter einen QCL-Typ D umfasst, der die QCL-Hypothese eines räumlichen Empfangsparameters umfasst.

11. Verfahren nach Anspruch 10, wobei
der erste Kommunikationsknoten ein drittes Quellreferenzsignal gemäß einer ersten voreingestellten Regel und dem ersten Quellreferenzsignal, das mit dem einen TCI-Zustand verknüpft ist, bestimmt,
wobei sich das dritte Quellreferenzsignal auf ein Quellreferenzsignal bezieht, das auf dem zweiten CC übertragen wird und den ersten QCL-Typparameter für das zweite Ziel-Downlink-Referenzsignal bereitstellt.

12. Verfahren nach Anspruch 10, wobei
der erste Kommunikationsknoten ein drittes Quellreferenzsignal gemäß einer dritten voreingestellten Regel und dem ersten Quellreferenzsignal oder dem zweiten Quellreferenzsignal, das mit dem einen TCI-Zustand verknüpft ist, bestimmt,
wobei sich das dritte Quellreferenzsignal auf ein Quellreferenzsignal bezieht, das auf dem zweiten CC übertragen wird und den ersten QCL-Typparameter für das zweite Ziel-Downlink-Referenzsignal bereitstellt.

13. Verfahren nach Anspruch 10, wobei
der erste Kommunikationsknoten ein drittes Quellreferenzsignal gemäß dem ersten Quellreferenzsignal, das mit dem einen TCI-Zustand verknüpft ist, einem Satz von Versätzen des ersten Quellreferenzsignals und einem Satz von CC-Indizes, die den Versätzen des ersten Quellreferenzsignals entsprechen, bestimmt,
wobei sich das dritte Quellreferenzsignal auf ein Quellreferenzsignal bezieht, das auf dem zweiten CC übertragen wird und den ersten QCL-Typparameter für das zweite Ziel-Downlink-Referenzsignal bereitstellt,
wobei der Versatz des ersten Quellreferenzsignals einen Quellindexversatz zwischen dem ersten Quellreferenzsignal und dem dritten Quellreferenzsignal umfasst;
und/oder,
der zweite Kommunikationsknoten bestimmt das erste Quellreferenzsignal und ein drittes Quellreferenzsignal gemäß einer vierten voreingestellten Regel, wobei sich das dritte Quellreferenzsignal auf ein Quellreferenzsignal bezieht, das auf dem zweiten CC übertragen wird und den ersten QCL-Typparameter für das zweite Ziel-Downlink-Referenzsignal bereitstellt.

14. Elektronische Vorrichtung, umfassend einen Speicher und einen Prozessor, wobei der Speicher ein Computerprogramm speichert und der Prozessor dazu konfiguriert ist, das Computerprogramm auszuführen, um das Verfahren nach einem der Ansprüche 1 bis 13 durchzuführen.

## Revendications

1. Un procédé de détermination d'hypothèse de quasi-colocalisation, QCL, exécuté par un second nœud de communication, le procédé comprenant :
la réception, par le second nœud de communication, d'informations concernant un état d'indicateur de configuration de transmission, TCI, envoyé par un premier nœud de communication, dans lequel l'unique état TCI correspond à un groupe de porteuses composantes, CC ;
la détermination, par le second nœud de communication, selon l'unique état TCI, d'un paramètre QCL de signaux de référence de liaison descendante cibles dans le groupe CC,
dans lequel le groupe CC comprend au moins une première CC et une seconde CC qui est configurée par une signalisation RRC envoyée par le premier nœud de communication, et les signaux de référence de liaison descendante cibles comprennent un premier signal de référence de liaison descendante cible reçu sur la première CC et un second signal de référence de liaison descendante cible reçu sur la seconde CC ;
dans lequel l'unique état TCI est associé aux informations de configuration suivantes : un premier signal de référence source et un second signal de référence source,
dans lequel le premier signal de référence source se réfère à un signal de référence source qui est reçu sur la première CC et fournit un premier paramètre de type QCL pour le premier signal de référence de liaison descendante cible ; le second signal de référence source se réfère à un signal de référence source qui est reçu sur la première CC et fournit un second paramètre de type QCL pour le premier signal de référence de liaison descendante cible,
dans lequel le premier paramètre de type QCL comprend un QCL-Type A qui comprend les hypothèses QCL suivantes : décalage de fréquence Doppler, étalement Doppler, retard moyen et étalement du retard ; et le second paramètre de type QCL comprend un QCL-Type D qui comprend une hypothèse QCL de paramètre spatial de réception.

2. Le procédé selon la revendication 1, dans lequel
le second nœud de communication détermine un troisième signal de référence source selon une première règle prédéfinie et le premier signal de référence source associé à l'unique état TCI,
dans lequel le troisième signal de référence source se réfère à un signal de référence source qui est transmis sur la seconde CC et fournit le premier paramètre de type QCL pour le second signal de référence de liaison descendante cible ou canal.

3. Le procédé selon la revendication 2, dans lequel la première règle prédéfinie comprend :
le premier signal de référence source est configuré en tant que signal de référence du troisième signal de référence source, et il existe une relation de mappage entre le premier signal de référence source et le troisième signal de référence source.

4. Le procédé selon la revendication 1, dans lequel
le second nœud de communication détermine un troisième signal de référence source selon une première règle prédéfinie et le premier signal de référence source ou le second signal de référence source associé à l'unique état TCI,
dans lequel le troisième signal de référence source se réfère à un signal de référence source qui est transmis sur la seconde CC et fournit le premier paramètre de type QCL pour le second signal de référence de liaison descendante cible.

5. Le procédé selon la revendication 4, dans lequel la troisième règle prédéfinie comprend au moins l'un des éléments suivants :
le premier signal de référence source ou le second signal de référence source est configuré dans le premier paramètre de type QCL d'un autre état TCI appliqué au troisième signal de référence source ; ou
le premier signal de référence source ou le second signal de référence source est configuré dans le second paramètre de type QCL d'un autre état TCI appliqué au troisième signal de référence source.

6. Le procédé selon la revendication 5, dans lequel
le premier signal de référence source ou le second signal de référence source comprend un bloc de signal de synchronisation, SSB, transmis sur la première CC.

7. Le procédé selon la revendication 1, dans lequel
le second nœud de communication détermine un troisième signal de référence source selon le premier signal de référence source associé à l'unique état TCI, un ensemble de décalages associé au premier signal de référence source, et un indice de CC de chaque CC des groupes CC, dans lequel le groupe CC correspond à l'ensemble de décalages,
dans lequel le troisième signal de référence source se réfère à un signal de référence source qui est transmis sur la seconde CC et fournit le premier paramètre de type QCL pour le second signal de référence de liaison descendante cible,
dans lequel chaque décalage de l'ensemble de décalages associé au premier signal de référence source comprend un décalage d'indice source entre le premier signal de référence source et le troisième signal de référence source.

8. Le procédé selon la revendication 1, dans lequel
le second nœud de communication détermine le premier signal de référence source et un troisième signal de référence source selon une quatrième règle prédéfinie,
dans lequel le troisième signal de référence source se réfère à un signal de référence source qui est transmis sur la seconde CC et fournit le premier paramètre de type QCL pour le second signal de référence de liaison descendante cible.

9. Le procédé selon la revendication 1, dans lequel
avant que le second nœud de communication ne reçoive l'unique état TCI indiqué par le premier nœud de communication pour recevoir les signaux de référence de liaison descendante cibles dans le groupe CC, le second nœud de communication détermine l'unique état TCI selon un premier état TCI dans un ensemble d'états TCI configuré par le premier nœud de communication pour une CC de référence,
dans lequel le premier état TCI est associé aux informations de configuration suivantes : le premier signal de référence source, le second signal de référence source ; et la CC de référence, la première CC et la seconde CC sont configurées dans le groupe CC.

10. Un procédé de détermination d'hypothèse de quasi-colocalisation, QCL, exécuté par un premier nœud de communication, le procédé comprenant :
l'envoi, par le premier nœud de communication, d'une signalisation RRC configurant des informations concernant un groupe de porteuses composantes, CC, dans lequel le groupe CC comprend au moins une première CC et une seconde CC,
l'envoi, par le premier nœud de communication, d'un état d'indicateur de configuration de transmission, TCI, à un second nœud de communication, dans lequel l'unique état TCI correspond au groupe de porteuses composantes ;
dans lequel l'état TCI est utilisé par le second nœud de communication pour déterminer un paramètre QCL de signaux de référence de liaison descendante cibles dans le groupe CC, et les signaux de référence de liaison descendante cibles comprennent un premier signal de référence de liaison descendante cible transmis sur la première CC, et un second signal de référence de liaison descendante cible transmis sur la seconde CC ;
l'envoi, par le premier nœud de communication, du signal de référence de liaison descendante cible de la seconde CC au second nœud de communication selon l'hypothèse QCL ;
dans lequel l'unique état TCI est associé aux informations de configuration suivantes: un premier signal de référence source et un second signal de référence source,
dans lequel le premier signal de référence source se réfère à un signal de référence source qui est transmis sur une première CC et fournit un premier paramètre de type QCL pour le premier signal de référence de liaison descendante cible, le second signal de référence source se réfère à un signal de référence source qui est transmis sur la première CC et fournit un second paramètre de type QCL pour le premier signal de référence de liaison descendante cible ;
dans lequel le premier paramètre de type QCL comprend un QCL-Type A qui comprend les hypothèses QCL suivantes : décalage de fréquence Doppler, étalement Doppler, retard moyen et étalement du retard ; et le second paramètre de type QCL comprend un QCL-Type D qui comprend une hypothèse QCL de paramètre spatial de réception.

11. Le procédé selon la revendication 10, dans lequel
le premier nœud de communication détermine un troisième signal de référence source selon une première règle prédéfinie et le premier signal de référence source associé à l'unique état TCI,
dans lequel le troisième signal de référence source se réfère à un signal de référence source qui est transmis sur la seconde CC et fournit le premier paramètre de type QCL pour le second signal de référence de liaison descendante cible.

12. Le procédé selon la revendication 10, dans lequel
le premier nœud de communication détermine un troisième signal de référence source selon une troisième règle prédéfinie et le premier signal de référence source ou le second signal de référence source associé à l'unique état TCI,
dans lequel le troisième signal de référence source se réfère à un signal de référence source qui est transmis sur la seconde CC et fournit le premier paramètre de type QCL pour le second signal de référence de liaison descendante cible.

13. Le procédé selon la revendication 10, dans lequel
le premier nœud de communication détermine un troisième signal de référence source selon le premier signal de référence source associé à l'unique état TCI, un ensemble de décalages du premier signal de référence source, et un ensemble d'indices de CC correspondant aux décalages du premier signal de référence source,
dans lequel le troisième signal de référence source se réfère à un signal de référence source qui est transmis sur la seconde CC et fournit le premier paramètre de type QCL pour le second signal de référence de liaison descendante cible,
dans lequel le décalage du premier signal de référence source comprend un décalage d'indice source entre le premier signal de référence source et le troisième signal de référence source ;
et/ou,
le second nœud de communication détermine le premier signal de référence source et un troisième signal de référence source selon une quatrième règle prédéfinie, dans lequel le troisième signal de référence source se réfère à un signal de référence source qui est transmis sur la seconde CC et fournit le premier paramètre de type QCL pour le second signal de référence de liaison descendante cible.

14. Un appareil électronique, comprenant une mémoire et un processeur, dans lequel la mémoire stocke un programme informatique, et le processeur est configuré pour exécuter le programme informatique afin d'exécuter le procédé selon l'une quelconque des revendications 1 à 13.
